# EUROPEAN PATENT SPECIFICATION

(11) **EP 0 621 857 B1**
(45) Date of publication and mention of the grant of the patent: **03.12.1997**
(21) Application number: 93902257.0
(22) Date of filing: 04.01.1993
(51) Int. Cl.: C03B 37/05

(54) **A METHOD AND AN APPARATUS FOR FORMING THE PRIMARY WEB OF A MINERAL FIBRE MAT**
VERFAHREN UND VORRICHTUNG ZUM HERSTELLEN DES HAUPTBANDES EINER MINERALFASERMATTE
PROCEDE ET APPAREIL DE FORMATION DE LA BANDE PRINCIPALE D'UNE NATTE DE FIBRES MINERALES

(30) Priority: 02.01.1992 FI 920015
(43) Date of publication of application: 02.11.1994
(73) Proprietor: Partek Paroc Oy Ab, 00500 Helsinki (FI)
(72) Inventor: HOIKKA, Timo, SF-21410 Vanhalinna (FI); NURMI, Tom, SF-21600 Parainen (FI); WALLI, Bjarne, SF-21600 Parainen (FI); ASTRAND, Erik, SF-21600 Parainen (FI)
(74) Representative: Haimelin, Jukka Ilmari
(86) International application number: FI9300002
(87) International publication number: WO9313025

(56) References cited:
- EP-A- 0 439 385
- US-A- 4 594 086

## Description

The invention relates to a method and an apparatus for forming the primary web of a mineral fibre mat from fibres manufactured from mineral melt by using centrifugal force, particularly by means of several slinger wheels linked in series; i.e. using what may be called the cascade method, as defined in claims 1 and 6 respectively.

In accordance with the principle of manufacturing mineral fibre by using centrifugal force, the molten mineral matter is led onto the periphery of a spinning or slinger wheel in strip form, from which the fibre embryos are drawn outwards by the centrifugal force produced by the great rotational velocity. A high-velocity medium flow is directed to pass close to the disc periphery, which medium flow finishes the fiber-formation and transports the fibres in the direction of the rotational axis of the wheel away from the fibre formation area. In cascade fiberization more than one slinger wheel is used, generally 2-4 wheels, in which case the molten material is led onto the first slinger wheel, from there to the second wheel rotating in the opposite direction, then to the third, and so on. At each wheel, with the possible exception of the first one, part of the molten material attaches itself in strip form onto the periphery of the wheel, and due to the centrifugal force and the passing medium flow forms fibres so that at the last wheel the entire molten material is fiberized.

The medium flow directs the fibres formed in the fiberization device into a wool chamber, at the opposite end of which the fibres are collected onto a wire or other corresponding air pervious forming-base conveyed in a direction essentially perpendicular to the medium flow direction and onto which the fibres form a thin mat, a primary web. The complete mineral wool blanket is formed by layering a required number of the primary webs one on top of the other.

The dispersion of air/fibres obtained from the fiberization device is essentially cylindrical in shape and in addition generally narrower than the desired primary web. This is why it has been difficult to collect onto forming bases webs that are of uniform quality right up to their edges. From the standpoint of proper web formation it is considered essential that the transportation of the fibres to the forming-base and their settling down on it is to be achieved by means of a suction force acting through the base. In other words, underpressure is maintained on the evacuation side of the forming-base with respect to the pressure prevailing on the formation side. In this manner, the fibres become settled to that part of the forming base where the suction produced by the underpressure is at its highest, i.e. where the fibre mat thusfar formed onto the base is at its thinnest. This production model requires the implementation of a closed transportation passage, i.e. a tunnel-like wool chamber between the fiberization device and the forming base. On the other hand the dispersion cloud issuing forth from the fiberization device needs to be equalized out over the width of the primary web and on the other hand because it is necessary to eliminate disturbing external streams influencing the settling down of the fibres and especially the settling down suction. Moreover, the chamber has to be relatively long for the desired results to be achieved.

The disturbance-free functioning of the wool chamber requires that its walls be kept clean. This, however, is very difficult because of the heat-hardening glue substance generally added to the fibres in conjunction with fiberization. Fibres coated with the said glue substance easily attach themselves to the walls of the chamber, the glue hardens in the warm conditions, and pre-tempered fibre/glue layers accumulate onto the walls, which layers cause disturbances in the air flow, and if loosened and mixed into the fibre suspension, cause defects in the fibre mat.

US patent specification no. 5 131 935 discloses the idea that mat formation can be influenced for instance by means of additional gas medium flows used at the fiberization stage. According to the said application, the additional gas medium flows can be used in the wool chamber to influence the flow properties in the wool chamber of the dispersion formed of fibres and the gas medium; for instance to prevent the formation of fibre accumulations. However, the said operation mode fails to take into account that the powerful suction force acting through the forming-base essentially delimits the possibilities to use the gas flows to shape and regulate the dispersion cloud issuing from the fiberization device and that shaping can actually be executed solely by means of these gas flows.

US patent specification no. 4 594 086 discloses a fiber mat formation apparatus, which contains a slinger wheel unit for the fiber formation, and a trough-formed channel as a "wool-chamber" into which the fibres are blown from the slinger wheels. The trough is formed from two parallel side walls at a certain distance from each other, and a bottom of air pervious material. The bottom of the trough is accomplished as a conveyor on which the primary fiber mat is deposited. The transport direction of the bottom conveyor is essentially the same as the main direction of the air blows from the fiber formation unit, whereby the fibers are layered on the conveyor under gravity and the suction directed to the fibers through the pervious conveyor. In order to influence to the formation of the fiber mat onto the conveyor, the apparatus contains air blow nozzles, which direct bordering curtain blows along the in-side walls of the channel. The curtain blows directed to the carried fibers at a point positioned an essential distance downstreams from the fiberization device equalize the cross section of the formed fiber mat within the limits of the side walls of the apparatus.

In accordance with the present invention, the fiber cloud is blown from the fiberization device onto the forming base under shaping guidance of the gas medium streams, and a state in which there is essentially no pressure difference through the forming base, but the pressure on the evacuation side is slightly lower than that on the formation side so, that the mat formed can remain on the forming base, is achieved and maintained on the web forming area. When acting in accordance with the said principle, it is firstly possible to achieve optimum fibre formation conditions by using an into the fiber formation area directed, as to its velocity and direction correctly controlled gas medium flow. Secondly, additional medium streams can be directed at the flow of formed fibres in order to achieve a proper dispersion of the fibers in the medium. And thirdly, the shape of the dispersion cloud can be modified beneficially with regard to the web formation, which modifications on the gas medium flow that flows through the formation area are taken into account without disturbance influences being transmitted upstream through the formation area to any of the above functions.

The invention will now be described in more detail by means of the appended drawing in which
Figure 1 shows a side view of the apparatus employed in the method in accordance with the invention,
Figure 2 shows a view from above of the apparatus employed in the method in accordance with the invention,
Figure 3 shows a front view of the fiberization apparatus used in the method in accordance with the invention, and
Figure 4 shows a schematic presentation of the gas medium flows when acting in accordance with the invention.

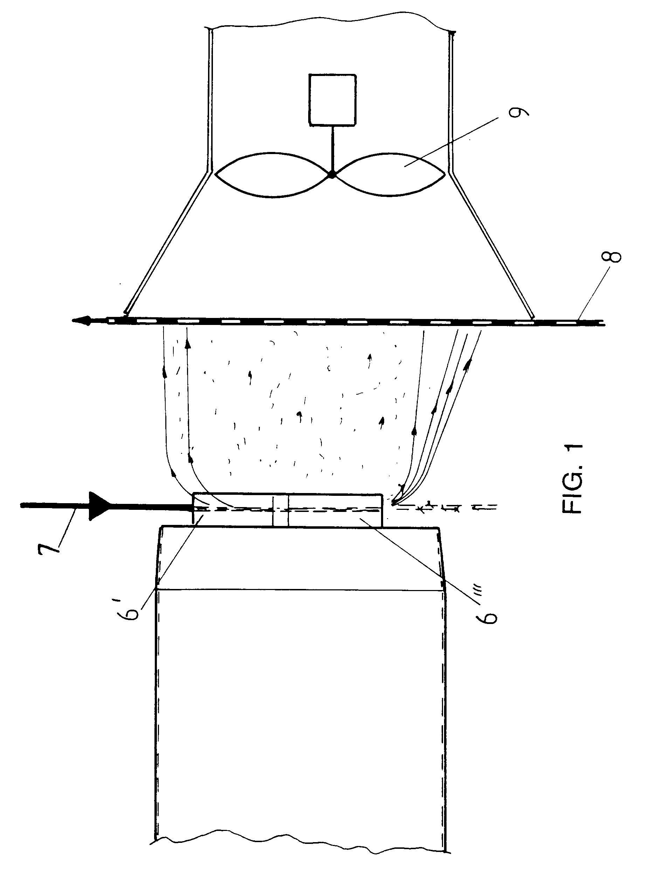

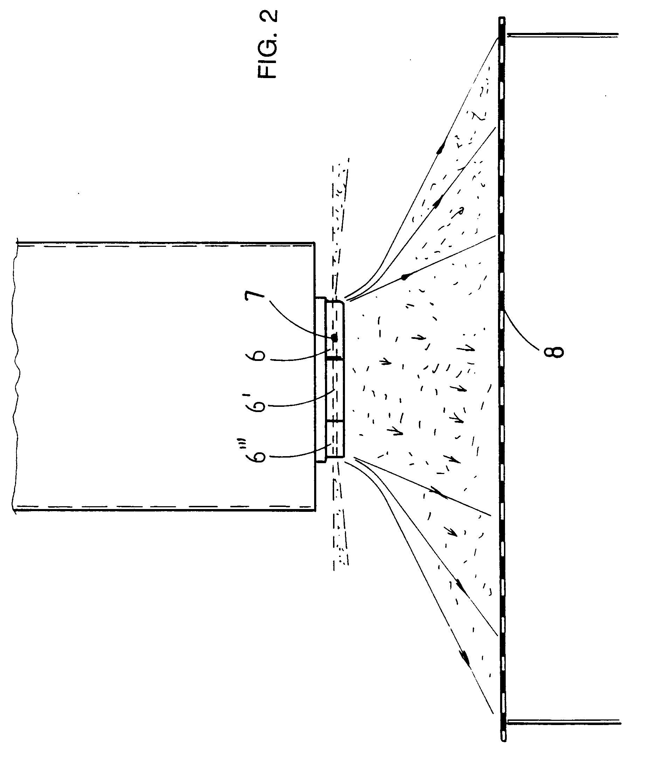

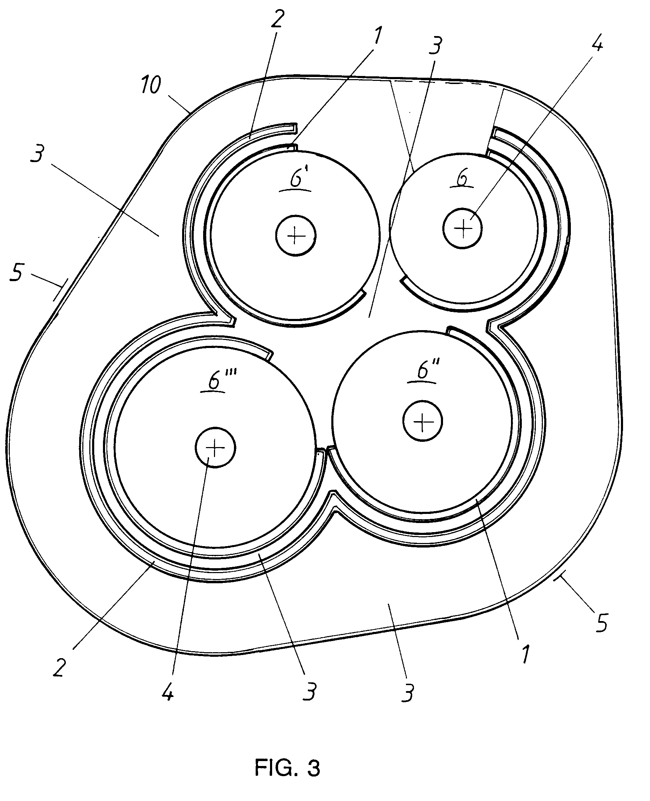

The implementation in accordance with Figs. 1 and 2 shows the interlinked group of slinger wheels 6 - 6''' to clarify the basic principle of the invention. The mutual location of the wheels is shown in Fig. 3.

In figures 1 and 2 the mass of molten mineral 7 is led to the periphery of the first or uppermost slinger wheel 6, from which the centrifugal force casts it partly into fibre embryos and draws it in fibre form into the high-velocity stream of air that is led past the periphery surface of the slinger wheel in the direction axis of rotation of the slinger wheel. Part of the molten material is cast onto the next wheel 6' and so on. The stream of air carries the fibres onto the wire 8 mounted in front of the slinger wheels, the said wire being kept in motion for the purpose of leading away the mat of fibre formed onto it. Air dissipated on the wire from the fibres is removed by means of a suction device 9. When acting in accordance with the invention, the suction device's operation is so regulated that the pressure on either side of the wire is essentially the same. In practice, the essentially same pressure means understandably that the pressure maintained on the evacuation side of the wire is slightly lower than that on the formation side so that the mat formed can remain on the wire. Nevertheless, excess of the pressure-difference essential for the mat to remain on the wire is to be avoided.

In the aforementioned basic state, the different gas medium flows employed in the fiberization stage can be used as properly as possible with regard to their basic function. The effect achieved on the fibre dispersion cloud by the regulation of the gas medium flows is clearly demonstrated when the shape of the clouds shown in Figs. 1 and 2 is compared. Whereas, in accordance with Fig. 1, hardly any change takes place in the shape of the cloud in the direction of motion of the forming base, Fig. 2 shows that the fibre dispersion cloud has been significantly expanded in the direction of the width of the forming-base, i.e. perpendicularly to the direction of motion of the forming base, as compared to the width that it has when emitted from the fiberization device. In prior art solutions, however, the corresponding expansion is achieved by means of an effective suction force acting essentially through the forming base 8. In the solution in accordance with the invention, however, this expansion is achieved by means of medium blows directed into the fiberization stage, the said blows acting mainly expandingly from the inside to make the dispersion cloud form a primary web of the desired width and formed in the desired manner on the forming-base.

Figure 3 illustrates the optional ways of guiding the various gas mediums (in practice often air) used in the fiberization stage. Firstly, part of the periphery of each slinger wheel 6 - 6''' is surrounded, slightly apart from the periphery, by a slit-like orifice 1 via which the fiberization air is blown tangentially to the periphery of the wheel. The purpose of this stream of air is to draw the fibre embryos into fibres, the said embryos having been forced up by the centrifugal force as embryos from the molten material rotating on the periphery of the slinger wheel. While the main direction of the fiberizing stream of air is essentially that of the axis of the slinger wheel, it is advantageous for the forming and onward transportation of the fibre dispersion cylinder formed in the stream of air after the slinger wheel if the said fiberizing stream of air is given a component of motion tangential to the slinger wheel, advantageously in the direction of rotation of the wheel.

In addition to the aforementioned stream of air essential for fiberization, Fig. 3 illustrates on the part of each slinger wheel yet another stream of air blown via nozzles or a uniform nozzle 2 partly surrounding the wheel. The purpose of this "transportation" stream of air is to dilute the fibre dispersion cylinder produced by the fiberizing stream of air and to further shape it into a form advantageous from the point of view of transportation and web formation. While the velocity of the transportation stream of air is essentially less than the velocity of the fiberizing stream of air, the volume flow of the former is greater than that of the latter. The transportation stream of air can be used to achieve essential changes in the internal fibre distribution of the fibre dispersion cloud after the slinger wheels and in the shape of the cloud perpendicular to its direction of progress. These matters can be influenced mainly by regulating the velocities of the transportation stream of air with respect to the surrounding streams of air. Another possibility to influence is to direct and/or divide the number of transportation streams of air differently by means of nozzles 2 located in different parts of the apparatus, the said nozzles being controllable and/or their flow cross-sections being variable or adjustable. The transportation streams of air can also be controlled via more than one radially, one-inside-the-other located nozzles 2, which can also be located axially, slightly shifted with respect to one another.

In accordance with another embodiment of the invention, part of the transportation air can be led through the axis of the slinger wheel. The said function is possible in a slinger wheel structure in which the rotor of the drive motor is mounted directly onto the axis of the slinger wheel so that the motor surrounds the axis of the slinger wheel.

The aforementioned measures make it possible to achieve an essential influence on the fibre dispersion cloud formed after the slinger wheels. An example of this is extending the width of the cloud but still retaining evenness of the fibre concentration inside the cloud. The said extension of width can be executed so that it is greater in one cross-section, advantageously in the horizontal plane, in which case the fibre dispersion cloud can be used to form an advantageously shaped and usable primary web on the forming-base, which is located essentially closer to the fiberization device than has been hitherto been possible when employing known art procedures. In practice this distance can be achieved within a range of c. 0.8 - 1.2 metres, although distances greater than these are, of course, within the scope of the invention. In equipment complying with the operational principles of state-of-the-art technology, the said distance is generally of the order of at least 2 metres if the width of the primary web is 2 metres.

The distance between the fiberization device and the forming base is related to the width of the forming base (measurement made perpendicularly to the direction of motion) such that the distance from the forming base to the fiberization device can be within the range of c. 0.2 - 1, advantageously 0.3 - 0.6) times the width of the forming base. A practical guideline for the distance is c. 0.8 - 1.2 metres and 0.8 - 4.5 metres for the width.

This fact, and the fact that no subsidiary flows occur due to the extra suction through the forming base, (more than 80% of the stream of air passing through the forming base has been observed to originate from the air from the fans) result in that the fibre dispersion can be made to pass from the fiberization device to the forming base in a space that has essentially no walls. This entirely eliminates problems resulting from the accumulation of material onto the walls of previously used wool chambers. Naturally, it is necessary to use an instrument, a trough or the like, for collecting and leading away non-fiberized pearls of material. The lack of a powerful suction force helps the said pearls to become separated from the stream of fibre. Here, too, the short distance between the fiberization device and the forming base does not cause any problems.

In addition to the aforementioned measures, it is advantageous for the entire fiberization device to be located in a tunnel-like enclosure so that two other auxiliary streams of air can be made use of. One of the two streams of air (air stream 3 in Fig. 3) is led outside the nozzles 2 inside the enclosure focusing the transportation stream of air and into the interspace of the slinger wheels 6. A separate fan is used to produce this stream of air. The ejection effect produced by the other streams of air and the slinger wheels inevitably influences this stream of air and results in a more or less uncontrollable flow regulating factor, but the said factor can, nevertheless be reduced by means of the aforementioned controlled blowing. The other stream of air can be achieved outside the enclosure as a kind of a curtain flow to border the fibre dispersion path should such a flow be felt necessary in a particular application.

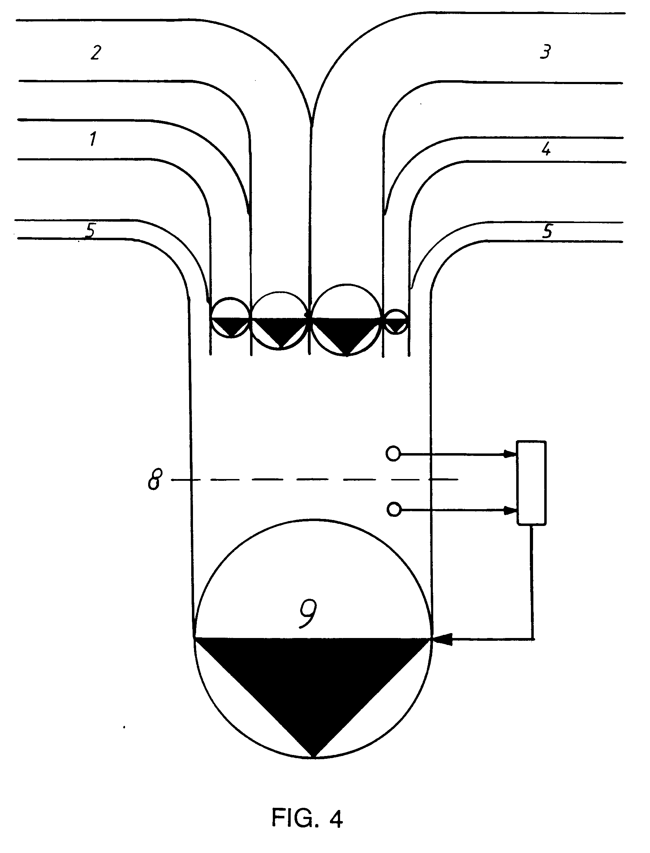

In an application in accordance with the invention, the streams of air used in connection with the fiberization stage have been illustrated in a manner corresponding to the above and with respect to their flow volumes in the appended Fig. 4. The figure also shows an evacuation fan 9 and a schematic presentation of the regulating device for controlling its functioning in accordance with the invention's operational principle. In principle, the said control can, for example, function according to the data provided by pressure-sensing sensors mounted on either side of the forming base 8. This data is compared to the set default value and the fan equipment 9 is then regulated accordingly.

When forming the fibre mat in accordance with the invention, it has been observed that the volume of the overall flow of air can be reduced in comparison with previous methods.

In the aforementioned modes of execution the forming base 8 has been depicted as being essentially a plane wire, but it is, of course,entirely within the scope of the invention for the forming-base to be for instance curved in the manner of a segment of a large-diameter drum. Similarly, it is not necessary for the forming-base to move precisely in the same plane as where the slinger wheels 6 - 6''' rotate; instead, the forming base can be moved at an angle deviating somewhat from the said plane.

In the above modes of execution the forming base has been presented as being moved vertically and the fibre dispersion cloud as being distributed horizontally. The implementation of the invention is still possible even if the forming base were to be moved, for instance, horizontally past the fiberization device or at any angle between the vertical and the horizontal planes, using which modes of moving it is possible to seek out the optimum situation between the mutual functioning of the cascade wheels on the one hand and the shaping of the fibre dispersion cloud on the other.

## Claims

1. A method for forming a primary web of a mineral fibre mat from fibres formed of molten mineral matter (7) by means of centrifugal force on slinger wheels (6, 6', 6'', 6''') in a fiberization device and transported as a fiber cloud from the fiberization device by gas medium streams (1, 2, 3, 4), the primary web being formed onto a wire (8) or a corresponding pervious forming base in motion in front of the fiberization device, **characterized** in that the fiber cloud is blown from the fiberization device onto the forming base (8) under shaping guidance of the gas medium streams (1, 2, 3, 4), and that a state in which there is essentially no pressure difference through the forming base (8), but the pressure on the evacuation side is slightly lower than that on the formation side so, that the mat formed can remain on the forming base (8), is achieved and maintained on the web forming area.

2. A method as claimed in claim 1, **characterised** in that at least three gas medium streams (1, 2, 3), essentially unidirectional in terms of their main direction of flow, are introduced into the fiberization device, the said streams being independently adjustable and/or controllable in terms of their direction, velocity and/or volume flow, the velocities of the said streams being inversely proportional to the distance from the slinger wheels (6, 6', 6'', 6''') in the direction of the centrifugal force.

3. A method as claimed in claim 2, **characterised** in that at least one (4) of the gas medium streams is led through a slinger wheel (6, 6', 6'', 6''').

4. A method as claimed in claims 2 or 3, **characterised** in that the web forming is controlled by controlling the mutual velocities and/or directions of gas medium streams (1, 2, 3, 4, 5).

5. A method as claimed in any of the above claims 1-4, **characterised** in that the gas medium streams (1, 2, 3, 4) are led in channels.

6. An apparatus for implementing the method according to claim 1, the apparatus consisting of at least one driven slinger wheel (6 - 6''') for the purpose of receiving molten mineral mass (7) and initiate the fiber formation, a slit orifice (1) for blowing the fiberization gas medium tangentially with respect to the slinger wheel and surrounding the slinger wheel in an arc-like manner at a small distance from the periphery or part of the periphery, transportation gas medium nozzles (2) located radially with respect to the slinger wheel outside the fiberization gas medium orifice and surrounding the fiberization gas medium orifice in an arc-like manner, a forming base (8) located essentially in front of the slinger wheel (6) or wheels (6', 6'', 6''') in a plane essentially parallel with the rotation plane of the said wheel(s), devices (9) for evacuating the gas medium through the forming wire, **characterized** by means for regulating and/or controlling the gas medium streams (1,2,3,4), and by control devices for maintaining a predetermined pressure difference over the forming wire (8) by controlling the suction devices (9), for the purpose of creating an area without subsidiary flows for shaping the fibre dispersion cloud between the fiberization device and the forming area (8).

7. An apparatus as claimed in claim 6, **characterised** in that the axis of at least one slinger wheel (6 - 6''') acting as a centrifugal fiberizer is hollow to allow a gas medium stream (4) to be directed via the said axis.

8. An apparatus as claimed in claims 6 or 7, **characterised** in that the control devices for the gas medium streams comprise an enclosure (10) surrounding the fiberization device in a tunnel-like manner.

9. An apparatus as claimed in claim 8, **characterised** in that the cross-sectional form of the enclosure (10) has been adapted to guide the shaping of the fibre dispersion cloud to be formed.

10. An apparatus as claimed in claims 8 or 9, **characterised** in that the equipment includes a fan for achieving the adjustable stream of air (3) through the tunnel enclosure.

11. An apparatus as claimed in any of the claims 6 - 10, **characterised** in that the distance between the forming-base (8) and the slinger wheels (6 - 6 ''') is c. 0.2 - 1.0 times the width of the forming base, advantageously c. 0.3 - 0.6 times the width of the forming base.

## Patentansprüche

1. Verfahren zur Bildung einer Primärbahn einer Mineralfasermatte aus Fasern, die aus einer Mineralschmelze (7) mit Hilfe von Zentrifugalkraft in Schleuderrädern (6, 6', 6'', 6''') in einer Faserherstellungsmaschine hergestellt und als eine Faserwolke aus der Faserherstellungsmaschine mit Gasmediumströmen (1, 2, 3, 4) transportiert werden, wobei die Primärbahn auf ein vor der Faserherstellungsmaschine beweglich angeordnetes Sieb (8) oder eine ähnliche durchlässige Formgrundfläche gebildet wird, dadurch **gekennzeichnet**, daß die Faserwolke aus der Faserherstellungsmaschine auf die Formgrundfläche (8) unter Steuerung der Faserbildung mit den Gasmediumströmen (1, 2, 3, 4) geblasen wird, und auf der Bahnbildungsfläche ein solcher Zustand erzielt und aufrechterhalten wird, in dem im wesentlichen kein Druckunterschied durch die Formgrundfläche (8) hindurch besteht, aber der Druck auf der Absaugungsseite ein wenig niedriger ist als der Druck auf der Faserbildungsseite, so daß die gebildete Matte auf der Formgrundfläche (8) verbleibt.

2. Verfahren nach Anspruch 1, dadurch **gekennzeichnet**, daß mindestens drei, ihrer Hauptströmungsrichtung nach im wesentlichen gleichgerichte Gasmediumströme (1, 2, 3) zu der Faserherstellungsmaschine zugeführt werden, wobei die Gasströme hinsichtlich ihrer Richtung, ihrer Geschwindigkeit und/oder ihres Volumenstroms unabhängig voneinander einstellbar und/oder steuerbar sind, wobei die Geschwindigkeiten der Gasströme in Richtung der Zentrifugalkraft in umgekehrtem Verhältnis zu ihrer Entfernung von den Schleuderrädern (6,6', 6'', 6''') stehen.

3. Verfahren nach Anspruch 2, dadurch **gekennzeichnet**, daß zumindest einer (4) der Gasmediumströme durch ein Schleuderrad (6, 6', 6'', 6''') hindurch geleitet wird.

4. Verfahren nach Anspruch 2 oder 3, dadurch **gekennzeichnet**, daß die Bahnbildung durch Steuerung der gegenseitigen Geschwindigkeiten und/oder Richtungen der Gasmediumströme (1, 2, 3, 4, 5) gesteuert wird.

5. Verfahren nach einem der Ansprüche 1 bis 4, dadurch **gekennzeichnet**, daß die Gasmediumströme (1, 2, 3, 4) durch Kanäle geleitet werden.

6. Vorrichtung zur Durchführung des Verfahrens nach Anspruch 1, bestehend aus zumindest einem angetriebenen Schleuderrad (6 - 6''') zur Aufnahme der Mineralschmelze (7) und zur Ingangsetzung der Faserbildung, einem Schlitzmundstück (1) zum Blasen des bei der Faserherstellung verwendeten Gasmediums tangential in bezuf auf das Schleuderrad, wobei das Schlitzmundstück bogenförmig um das Schleuderrad in einem geringen Abstand vom Umfang des Schleuderrads oder von einem Abschnitt des Umfangs des Schleuderrads angeordnet ist, Transportgasmediumdüsen (2), die in bezug auf das Schleuderrad in radialer Richtung außerhalb des bei der Faserherstellung verwendeten Gasmediummundstücks bogenförmig um das Mundstück angeordnet sind, einer Formgrundfläche (8), die im wesentlichen vor dem Schleuderrad (6) bzw. den Schleuderrädern (6',6'', 6''') in einer im wesentlichen parallel zur Rotationsebene des Schleuderrads bzw. der Schleuderräder verlaufenden Ebene angeordnet ist, Einrichtungen (9) zum Absaugen des Gasmediums durch das Formsieb, dadurch **gekennzeichnet**, daß Einrichtungen zur Regulierung und/oder zur Steuerung der Gasmediumströme (1, 2, 3, 4) und Steuereinrichtungen zur Aufrechterhaltung einer vorbestimmten Druckdifferenz über das Formsieb (8) mittels Regulierung der Absaugungseinrichtungen (9) zur Schaffung eines im wesentlichen von Nebenströmen freien Bereichs zur Bildung einer Faserdispersionswolke zwischen der Faserherstellungsmaschine und der Faserbildungsfläche (8) vorgesehen sind.

7. Vorrichtung nach Anspruch 6, dadurch **gekennzeichnet**, daß die Achse zumindest eines als Zentrifugal-Faserbildner funktionierenden Schleuderrads (6 - 6''') zur Leitung eines Gasmediumstroms (4) durch die Achse ausgehöhlt ist.

8. Vorrichtung nach Anspruch 6 oder 7, dadurch **gekennzeichnet**, daß die Steuereinrichtungen für die Gasmediumströme ein die Faserherstellungsmaschine in Form von Kanälen einschließendes Gehäuse (10) aufweisen.

9. Vorrichtung nach Anspruch 8, dadurch **gekennzeichnet**, daß die Querschnittsform des Gehäuses (10) zur Steuerung der Bildung der Faserdispersionswolke angepaßt ist.

10. Vorrichtung nach Anspruch 8 oder 9, dadurch **gekennzeichnet**, daß die Vorrichtung einen Bläser zum Einbringen eines steuerbaren Luftstroms (3) durch das in Form von Kanälen vorliegende Gehäuse aufweist.

11. Vorrichtung nach einem der Ansprüche 6 bis 10, dadurch **gekennzeichnet,** daß der Abstand zwischen der Formgrundfläche (8) und den Schleuderrädern (6 - 6''') um etwa 0,2- bis 1-fach, vorzugsweise um etwa 0,3- bis 0,6-fach die Breite der Formgrundfläche beträgt.

## Revendications

1. Procédé de formation d'une bande principale d'une natte de fibres minérales, à partir de fibres formées de matière minérale fondue (7), au moyen d'une force centrifuge sur des roues d'éjection (6,6',6'',6''') dans un dispositif de génération de fibres,et transportées en un nuage de fibres à partir du dispositif de génération de fibres par des flux de fluide gazeux (1,2,3,4), la bande principale étant formée sur une toile métallique (8) ou une base de formation perméable correspondante en mouvement en face du dispositif de génération de fibres, caractérisé en ce que le nuage de fibres est soufflé du dispositif de génération de fibres vers la base de formation (8) suivant une configuration guidée par les flux de fluide gazeux (1,2,3,4), et en ce qu'un état, dans lequel il n'y a sensiblement pas de différence de pression à travers la base de formation (8) mais la pression du côté évacuation est légèrement plus faible que la pression du côté formation de sorte que la natte formée peut rester sur la base de formation (8), est créé et maintenu sur la surface de formation de bande.

2. Procédé suivant la revendication 1, caractérisé en ce qu'au moins trois flux de fluide gazeux (1,2,3), sensiblement unidirectionnels en ce qui concerne leur direction principale d'écoulement, sont introduits dans le dispositif de génération de fibres, lesdits flux étant réglables et/ou contrôlables de façon indépendante en ce qui concerne leur direction, leur vitesse et/ou leur débit volumique, les vitesses des dits flux étant inversement proportionnelles à la distance par rapport aux roues d'éjection (6,6',6'',6''') dans la direction de la force centrifuge.

3. Procédé suivant la revendication 2, caractérisé en ce qu'au moins un (4) des flux de fluide gazeux est amené à travers une roue d'éjection (6,6',6'',6''').

4. Procédé suivant les revendications 2 ou 3, caractérisé en ce que la formation de la bande est commandée par réglage des vitesses et/ou directions mutuelles des flux de fluide gazeux (1,2,3,4,5).

5. Procédé suivant une quelconque des revendications précédentes 1 à 4, caractérisé en ce que les flux de fluide gazeux (1,2,3,4) sont conduits dans des canaux.

6. Appareil pour la mise en oeuvre du procédé suivant la revendication 1, l'appareil comprenant au moins une roue d'éjection entraînée (6-6''') pour recevoir une masse minérale fondue (7) et commencer la formation de fibres, un orifice à fentes (1) pour souffler le fluide gazeux de génération de fibres tangentiellement à la roue d'éjection et autour de la roue d'éjection suivant un arc à une petite distance de la périphérie ou d'une partie de la périphérie, des buses de fluide gazeux de transport (2) situées radialement par rapport à la roue d'éjection, en dehors de l'orifice de fluide gazeux de génération de fibres et autour de l'orifice de fluide gazeux de génération de fibres suivant un arc, une base de formation (8) située sensiblement en face de la roue ( 6) ou des roues (6',6'',6''') d'éjection dans un plan sensiblement parallèle au plan de rotation de ladite roue ou desdites roues, et des dispositifs (9) d'évacuation du fluide gazeux à travers la toile métallique de formation, caractérisé en ce qu' il comprend des moyens de réglage et/ou de commande des flux de fluide gazeux (1,2,3,4), et des dispositifs de réglage pour maintenir une différence de pression prédéterminée sur la toile métallique de formation (8) par réglage des dispositifs d'aspiration (9) dans le but de créer une zone sans écoulements secondaires pour la mise en forme du nuage de dispersion de fibres entre le dispositif de génération de fibres et la surface de formation (8).

7. Appareil suivant la revendication 6, caractérisé en ce que l'axe d'au moins une roue d'éjection (6-6''') agissant comme un élément de génération de fibres à centrifugation est creux pour permettre de diriger un flux de fluide gazeux (4) par l'intermédiaire dudit axe.

8. Appareil suivant les revendications 6 ou 7, caractérisé en ce que les dispositifs de réglage des flux de fluide gazeux comprennent une enceinte (10) entourant le dispositif de génération de fibres à la manière d'un tunnel.

9. Appareil suivant la revendication 8, caractérisé en ce que la forme de section transversale de l'enceinte (10) est prévue pour guider la configuration du nuage de dispersion de fibres à former.

10. Appareil suivant les revendications 8 ou 9, caractérisé en ce que l'équipement comprend un ventilateur pour engendrer le flux réglable d'air (3) à travers l'enceinte en tunnel.

11. Appareil suivant une quelconque des revendications 6 à 10, caractérisé en ce que la distance entre la base de formation (8) et les roues d'éjection (6-6''') est de 0,2 à 1,0 fois environ la largeur de la base de formation, et avantageusement de 0,3 à 0,6 fois environ la largeur de la base de formation.
